# EUROPEAN PATENT SPECIFICATION

(11) **EP 3 494 154 B1**
(45) Date of publication and mention of the grant of the patent: **22.11.2023**
(21) Application number: 17752514.4
(22) Date of filing: 18.07.2017
(51) Int. Cl.: C08G 18/48, C08G 18/63, C08G 18/66, C08G 18/76, C08G 18/32, C08G 18/40

(54) **POLYURETHANE FOAM FOR THIN WALL APPLICATIONS**
POLYURETHANSCHAUM FÜR DÜNNWANDIGE ANWENDUNGEN
MOUSSE DE POLYURÉTHANE POUR APPLICATIONS DE PAROIS MINCES

(30) Priority: 04.08.2016 US 201662370763 P
(43) Date of publication of application: 12.06.2019
(73) Proprietor: Dow Global Technologies LLC, Midland, MI 48674 (US)
(72) Inventor: KISZKA, Kelly F., Midland, MI 48674 (US)
(74) Representative: Boult Wade Tennant LLP
(86) International application number: PCT/US2017/042566
(87) International publication number: WO 2018/026506

(56) References cited:
- US-A- 5 459 221

## Description

### FIELD OF THE INVENTION

The present invention relates to a composition and process for making polyurethane foam useful for thin wall applications. Said foams are particularly suited for applications in motor vehicles requiring good flow and stability such as instrument panels.

### BACKGROUND OF THE INVENTION

US 5,459,221 relates to an isocyanate prepolymer composition useful in the preparation of flexible polyurethane foams which are particularly suitable in seating applications.

Automotive original equipment manufacturers (OEMs) have long used molded polyurethane foam as a means of providing a soft and luxurious feel to instrument panels. However, this well known approach is not exempt from the automotive industry trend towards light weighting.

There is a need to provide a polyurethane foam system having a good balance of flow characteristics and providing a stable/uniform cell structure foam at standard density of around 128 kg/m³ (8 pcf) or less for use in producing instrument panels with foam thicknesses in the range of 3mm to 8mm.

### BRIEF SUMMARY OF THE INVENTION

The present invention is a polyurethane foam having good combination of flow characteristics and stability and process to make said polyurethane foam.

The polyurethane foam of the present invention comprises the reaction product of: a) an A-side consisting essentially of i) a polymeric MDI blend, and b) a B-side comprising: i) 0 to less than 10 wt % of a polyether polyol having a functionality equal to 2, ii) 35 to 80 wt % of a polyether polyol having a functionality equal to 3, iii) 0 to 45 wt % of a polyether polyol having a functionality greater than 3, iv) 5 to 15 wt % of a copolymer polyol, v) 0.1 to 0.4 wt % of a blowing catalyst, vi) 0.5 to 1 wt % of a gelling catalyst, vii) 1 to 4 wt % of a cell opener, and viii) 1 to 4 wt % of water, wherein the B-side weight percents are based on the total weight of the B-side.

The present invention also provides a process to make the polyurethane foam disclosed herein above comprising the steps of: A) forming a reactive blend by mixing said A-side and said B-side at or below 40.6 °C (105°F) and in a ratio (A-side):(B-side), of 1:1 to 5:1 by volume; and B) subjecting the resulting reactive blend to conditions sufficient to cure the reactive blend to form a polyurethane foam.

### DETAILED SUMMARY OF THE INVENTION

The foam according to the present invention comprises (a) an A-side consisting essentially of (i) a polymeric MDI blend, (b) a B-side comprising, consisting essentially of, or consisting of a polyol blend comprising, consisting essentially of, or consisting of i) 0 to less than 10 wt % of a polyether polyol having a functionality equal to 2, ii) 35 to 80 wt % of a polyether polyol having a functionality equal to 3, iii) 0 to 45 wt % of a polyether polyol having a functionality greater than 3, iv) 5 to 15 wt % of a copolymer polyol, v) 0.1 to 0.4 wt % of a blowing catalyst, vi) 0.5 to 1 wt % of a gelling catalyst, vii) 1 to 4 wt % of a cell opener, and viii) 1 to 4 wt % of water, wherein the B-side weight percents are based on the total weight of the B-side. The A-side is mixed at 40.6 °C (105°F) or less, with the B-side to form (c) a reactive blend. The resulting reactive blend is subjected to conditions sufficient to cure the reactive blend to form a polyurethane foam.

In one embodiment of the present invention, the polyurethane foam is a semi-rigid polyurethane foam. The semi-rigid polyurethane foam of the present invention is a substantially rigid foam generally having a substantially closed cellular structure which essentially fails to elastically deform (i.e., any deformation of the foam tends to be permanent). These materials do not in general have the capability of resisting permanent deformation after repeated compressions in excess of 50%. Such resistance to permanent deformation of deformation set has not been a feature of polyurethane foam materials, but for most purposes, where the material is not subjected to repeated compression, this has posed no problem. Semi-rigid foams have more rigid character and do not recover 100% after deformation. Typically these foam systems have a high capacity for energy absorption application area include side impact, head impact and bumpers. Cross-linker and copolymer polyol levels are generally increased to maximize foam hardness and energy dissipation characteristics.

Suitable organic isocyanates (a)(i) for use in the composition and process of the present invention include oligomers of diphenylmethane diisocyanates (MDI) in the form of its 2,4'-, 2,2'- and 4,4'-isomers and mixtures thereof having an isocyanate functionality greater than 2 known in the art as polymeric MDI (polymethylene polyphenylene polyisocyanates), the known variants of MDI comprising urethane, allophanate, urea, biuret, carbodiimide, uretonimine and/or isocyanurate groups.

Preferably the NCO value for the MDI is equal to or greater than 10 percent, preferably equal to or greater than 15 percent, and more preferably equal to or greater than 18 percent. Preferably the NCO value for the MDI is equal to or less than 33 percent, preferably equal to or less than 32 percent.

Preferably polymeric MDI and/or liquid variants thereof are obtained by introducing uretonimine and/or carbodiimide groups into said polyisocyanates, such a carbodiimide and/or uretonimine modified polyisocyanate having an NCO value of from 18 to 33 percent and includes 1 to 45 percent by weight of 2,4'-diphenylmethane diisocyanate in the form of a monomer and/or a carbodiimidization product thereof. For a good description of such carbodiimide and/or uretonimine modified polyisocyanates see USP 6,765,034.

The MDI a) i) is present in the A-side in an amount of equal to or greater than 55 weight percent, preferably equal to or greater than 60 weight percent, and more preferably equal to or greater than 65 weight percent, based on the total weight of the A-side. The MDI is present in the A-side in an amount of equal to or less than 100 weight percent, preferably equal to or less than 95 weight percent, and more preferably equal to or less than 85 weight percent, based on the total weight of the A-side.

The A-side may further comprise at least one plasticizer. Suitable plasticizers are various carboxylic ester compounds such as bis (2-ethylhexyl) phthalate, diisononyl phthalate, bis(n-butyl) phthalate, butyl benzyl phthalate, diisodecyl phthalate, diethyl phthalate, diisobutyl phthalate, di-n-hexyl phthalate, trimethyl trimellitate, tri-(2-ethylhexyl) trimellitate, tri-(n-octyl,n-decyl) trimellitate, tri-(heptyl,nonyl) trimellitate, n-octyl trimellitate, bis(2-ethylhexyl)adipate, dimethyl adipate, monomethyl adipate, dioctyl adipate, dibutyl sebacate, dibutyl maleate, diisobutyl maleate, various benzoate esters, various vegetable oils and modified vegetable oils (such as epoxidized vegetable oils, various sulfonamides such as n-ethyl toluene sulfonamide, n-(2-hydroxypropyl) benzene sulfonamide, N-(n-butyl)benzene sulfonamide (DOA)and the like, various phosphate esters such as tricresyl phosphate and tributyl phosphate, glycol esters such as triethylene glycol dihexanoate and tetraethylene glycol diheptanoate and the like, polybutene polymers, various acetylated monoglycerides, alkyl citrates such as triethyl citrate, acetyl triethyl citrate, tributyl citrate, trioctyl citrate, acetyl trioctyl citrate, acetyl trihexyl citrate, butyryl trihexyl citrate and the like; alkyl sulphonic acid phenyl ester, 1,2-cyclohexane dicarboxylate diesters such as 1,2-cyclohexane diisononyl ester, and the like.

If present, the plasticizer is present in the A-side in an amount of equal to or greater than 10 weight percent, preferably equal to or greater than 12 weight percent, and more preferably equal to or greater than 15 weight percent, based on the total weight of the A-side. The plasticizer is present in the A-side in an amount of equal to or less than 35 weight percent, preferably equal to or less than 30 weight percent, and more preferably equal to or less than 25 weight percent, based on the total weight of the A-side.

The A-side may further comprise at least one surfactant. A surfactant is preferably included in the foam formulation to help stabilize the foam as it expands and cures. Examples of surfactants include nonionic surfactants and wetting agents such as those prepared by the sequential addition of propylene oxide and then ethylene oxide to propylene glycol, solid or liquid organosilicones, and polyethylene glycol ethers of long chain alcohols. Ionic surfactants such as tertiary amine or alkanolamine salts of long chain alkyl acid sulfate esters, alkyl sulfonic esters and alkyl arylsulfonic acids can also be used. The surfactants prepared by the sequential addition of propylene oxide and then ethylene oxide to propylene glycol are preferred, as are the solid or liquid organosilicones. Examples of useful organosilicone surfactants include commercially available polysiloxane/polyether copolymers such as TEGOSTAB^{™} B-8729, B-8404, B-8870, and B-8719LF available from Goldschmidt Chemical Corp., DABCO^{™} DC -198 available from Air Products, and NIAX^{™} L2171 surfactant from Momentive Performance Materials. Non-hydrolyzable liquid organosilicones are more preferred. If present, the surfactant is typically present in an amount equal to or greater than 0.1 weight percent, preferably equal to or greater than 0.2 weight percent, and more preferably equal to or greater than 0.5 weight percent based on the total weight of the A-side. The surfactant is typically present in an amount equal to or less than 2 weight percent, preferably equal to or less than 1.5 weight percent, and more preferably equal to or less than 1 weight percent based on the total weight of the A-side.

The B-side comprises a polyol blend comprising b) i) optionally a polyether polyol having a functionality equal to 2, b) ii) a polyether polyol having a functionality equal to 3, b) iii) optionally a polyether polyol having a functionality greater than 3, and b) iv) a copolymer polyol. Modified polyols, often referred to as "copolymer polyols" have been fully described in the prior art and include products obtained by the in situ polymerization of one or more vinyl monomers, for example styrene and acrylonitrile, in polymeric polyols, for example polyether polyols, or by the in situ reaction between a polyisocyanate and an amino- or hydroxy-functional compound, such as triethanolamine, in a polymeric polyol.

The polymer modified polyols which are particularly interesting in accordance with the invention are products obtained by in situ polymerization of styrene and/or acrylonitrile in polyoxyethylene polyoxypropylene polyols and products obtained by in situ reaction between a polyisocyanate and an amino or hydroxy-functional compound (such as triethanolamine) in a polyoxyethylene polyoxypropylene polyol.

Polyoxyalkylene polyols containing from 5 to 50 percent of dispersed polymer are particularly useful. Particle sizes of the dispersed polymer of less than 50 µm (microns) are preferred. Mixtures of such isocyanate-reactive components may be used as well. Most preferably polyols are used which do not comprise primary, secondary or tertiary nitrogen atoms.

The copolymer polyol is present in the B-side in an amount equal to or greater than 5 weight percent based on the total weight of the B-side. The copolymer polyol is present in the B-side an amount equal to or less than 15 weight percent, preferably equal to or less than 10 weight percent, based on the total weight of the B-side.

The polyol blend comprises polyether polyol b) i) optionally a polyether polyol having a functionality equal to 2, b) ii) a polyether polyol having a functionality equal to 3, and optionally b) iii) a polyether polyol having a functionality greater than 3. Suitable polyether polyols have been fully described in the prior art and include reaction products of alkylene oxides, for example ethylene oxide and/or propylene oxide, with initiators having a functionality of from 2 to 8, preferably 3 to 8, and an average hydroxyl number preferably from about 100 to 850, more preferably from about 200 to 750, and more preferably 200 to 650. Of particular importance for the preparation of the polyurethane foams of the present invention having one or more polyether polyol with a functionality of 2, one or more polyether polyol having the functionality of 3, and one or more polyether polyol having a functionality of greater than 3 and equal to and less than 8. The polyol or polyols may have a viscosity at 25°C of at least about 500 mPas (500 cP) as measured according to ASTM D455. In some embodiments, a higher viscosity, of at least about 2,000 mPas (2,000 cP) may be preferable. Preferably, the polyol or polyols have an average molecular weight of from 100 to 10,000, more preferably of from 200 to 5,000.

Suitable initiators for the present invention include: polyols, for example ethylene glycol, diethylene glycol, propylene glycol, dipropylene glycol, butane diol, glycerol, trimethylolpropane, triethanolamine, pentaerythritol, sorbitol and sucrose; polyamines, for example ethylene diamine, tolylene diamine, diaminodiphenylmethane and polymethylene polyphenylene polyamines; and aminoalcohols, for example ethanolamine and diethanolamine; and mixtures of such initiators. Other suitable polyols include polyesters obtained by the condensation of appropriate proportions of glycols and higher functionality polyols with polycarboxylic acids. Still further suitable polyols include hydroxyl terminated polythioethers, polyamides, polyesteramides, polycarbonates, polyacetals, polyolefins and polysiloxanes. Still further suitable isocyanate-reactive components include ethylene glycol, diethylene glycol, propylene glycol, dipropylene glycol, butane diol, glycerol, trimethylolpropane, ethylene diamine, ethanolamine, diethanolamine, triethanolamine and the other initiators mentioned before. Mixtures of such isocyanate-reactive components may be used as well. Most preferably polyols are used which do not comprise primary, secondary or tertiary nitrogen atoms.

Of particular importance for the preparation of the polyurethane foams of the present invention are polyether polyols and polyol mixtures having a hydroxyl number of equal to or greater than 50, preferably equal to or greater than 80, more preferably equal to or greater than 100. Hydroxyl number indicates the number of reactive hydroxyl groups available for reaction. It is expressed as a number of milligrams of potassium hydroxide equivalent to the hydroxyl content of one gram of polyol. Of particular importance for the preparation of the polyurethane foams of the present invention are polyols and polyol mixtures having hydroxyl number of equal to or less than 1,200, preferably equal to or less than 1,000, more preferably equal to or less than 800.

Of particular importance for the preparation of the polyurethane foams are reaction products of alkylene oxides, for example ethylene oxide and/or propylene oxide, with initiators containing from 2 to 8, preferably 3 to 8 active hydrogen atoms per molecule. Suitable initiators include: polyols, for example ethylene glycol, diethylene glycol, propylene glycol, dipropylene glycol, butane diol, glycerol, trimethylolpropane, triethanolamine, pentaerythritol and sorbitol; polyamines, for example ethylene diamine, tolylene diamine, diaminodiphenylmethane and polymethylene polyphenylene polyamines; and aminoalcohols, for example ethanolamine and diethanolamine; and mixtures of such initiators. Other suitable polyols include polyesters obtained by the condensation of appropriate proportions of glycols and higher functionality polyols with polycarboxylic acids. Still further suitable polyols include hydroxyl terminatedpolythioethers, polyamides, polyesteramides, polycarbonates, polyacetals, polyolefins and polysiloxanes. Preferred polyols are the polyether polyols comprising ethylene oxide and/or propylene oxide units and most preferably polyoxyethylene polyoxypropylene polyols having an oxyethylene content of at least 10 percent and preferably 10 to 85 percent by weight. A preferred isocyanate-reactive component comprises an ethylene-oxide capped polyether polyol.

If present, the polyether polyol having a functionality equal to 2 b) i) is present in the B-side in an amount equal to or greater than 0 weight percent, preferably equal to or greater than 0.5 weight percent, and more preferably equal to or greater than 1 weight percent based on the total weight of the B-side. If present, the polyether polyol having a functionality equal to 2 is present in the B-side in an amount equal; to or less than 10 weight percent, preferably equal to or less than 7.5 weight percent, and more preferably equal to or less than 5 weight percent based on the total weight of the B-side.

The polyether polyol having a functionality equal to 3 b) ii) is present in the B-side in an amount equal to or greater than 35 weight percent, preferably equal to or greater than 45 weight percent, and more preferably equal to or greater than 50 weight percent based on the total weight of the B-side. The autocatalytic polyol compound b) ii) is present in the B-side in an amount equal to or less than 80 weight percent, preferably equal to or less than 78 weight percent, and more preferably equal to or less than 75 weight percent based on the total weight of the B-side.

If present, the polyether polyol having a functionality greater than 3 b) iii) is present in the B-side in an amount equal to or greater than 5 weight percent, preferably equal to or greater than 10 weight percent, and more preferably equal to or greater than 15 weight percent based on the total weight of the B-side. If the polyether polyol having a functionality greater than 3 b) iii) is present in the B-side in an amount equal to or less than 45 weight percent, preferably equal to or less than 43 weight percent, and more preferably equal to or less than 40 weight percent based on the total weight of the B-side.

Generally, polyurethane foam catalyst systems comprise compounds which accelerate both the blowing (water-isocyanate) and gelling (polyol-isocyanate) reactions. It is beneficial to balance these reactions in order to produce quality foams with acceptable properties. Compositions and formulations of the present invention can comprise a single compound which accelerates, but keeps in balance, both the blowing and gelling reactions. Alternatively, the compositions can comprise at least one catalyst that predominantly accelerates the blowing reaction (a blowing catalyst), or at least one catalyst that predominantly accelerates the gelling reaction (a gelling catalyst), or a combination thereof. As described herein, a blowing catalyst is a catalyst that predominantly accelerates the blowing reaction, but can also, in certain circumstances, accelerate the gelling reaction, albeit to a lesser degree. Similarly, a gelling catalyst is a catalyst that predominantly accelerates the gelling reaction, but can also, in certain circumstances, accelerate the blowing reaction, albeit to a lesser degree.

The B-side comprises at least one blowing catalyst b) v). Exemplary blowing catalysts containing isocyanate reactive groups include 2-[N-(dimethylaminoethoxyethyl)-N-methylamino]ethanol (DABCO NE200), dimethylaminoethoxyethanol and N,N,N'-trimethyl-N'-3-aminopropyl-bis(aminoethyl) ether (DABCO NE300). The catalyst may also comprise tertiary amines that are highly volatile and not isocyanate-reactive. Suitable volatile blowing catalysts include, for example, bis-dimethylaminoethyl ether, commercially supplied as DABCO BL-11 catalyst by Air Products and Chemicals, Inc.; as well as pentamethyldiethylenetriamine (POLYCAT^{™} 5, Air Products and Chemicals, Inc.) and related compositions; higher permethylated polyamines; 2-[N-(dimethylaminoethoxyethyl)-N-methylamino]ethanol and related structures; alkoxylated polyamines; imidazole-boron compositions; or amino propyl-bis(amino-ethyl)ether compositions. A preferable blowing catalyst is 2-[[2-[2-(dimethylamino)ethoxy]ethyl]methylamino]-ethanol (JEFFCAT^{™} ZF 10 from Huntsman Chemical Company). The catalyst compositions may also include other components, for example transition metal catalysts such as organotin compounds, salts of tin, organobismuth and bismuth salts.

Blowing catalysts are used in an amount equal to or greater than 0.1 weight percent, preferably equal to or greater than 0.2 weight percent based on the total weight of the B-side. Blowing catalysts are used in an amount equal to or less than 0.4 weight percent based on the total weight of the B-side.

The B-side comprises at least one gelling catalyst b) vi). Exemplary gelling catalysts include N,N-bis(3-dimethylamino-propyl) N-isopropanolamine; N,N-dimethylaminoethyl-N'-methyl ethanolamine (DABCO T, Air Products and Chemicals, Inc. of Allentown, Pa.); N,N,N'-trimethylaminopropyl ethanolamine (POLYCAT 17, by Air Products and Chemicals, Inc.), N,N-dimethylethanolamine (DABCO DMEA); N,N-dimethyl-N',N'-2-hydroxy(propyl)-1,3-propylenediamine; dimethylaminopropylamine (DMAPA); (N,N-dimethylaminoethoxy)ethanol, methyl-hydroxy-ethyl-piperazine, bis(N,N-dimethyl-3-aminopropyl)amine (POLYCAT 15), N,N-dimethylaminopropyl urea (DABCO NE1060, DABCO NE1070), N,N'-bis(3-dimethylaminopropyl)urea (DABCO NE1060, DABCO NE1070), bis(dimethylamino)-2-propanol, N-(3-aminopropyl)imidazole, N-(2-hydroxypropyl)imidazole, and N-(2-hydroxyethyl)imidazole. Suitable volatile gelling catalysts may include, for example, diazabicyclooctane (triethylenediamine), supplied commercially as DABCO 33-LV catalyst, tris(dimethyalminopropyl)amine (POLYCAT 9), dimethylaminocyclohexylamine (POLYCAT 8) and bis(dimethylaminopropyl)-N-methylamine (POLYCAT 77).

Gelling catalysts are used in an amount equal to or greater than 0.5 weight percent based on the total weight of the B-side. Gelling catalysts are used in an amount equal to or less than 1 weight percent based on the total weight of the B-side.

The B-side comprises at least one cell opener b) vii). Exemplary cell openers comprise any suitable molecule containing active methylene or methine groups such as at least one member selected from the group consisting of 2-cyanoacetamide, N-methyl cyanoacetamide, N-ethylcyanoacetamide, N-propylcyanoacetamide, N-butylcyanoacetamide, or N-hydroxyethyl-cyanoacetamide.

Cell openers are used in an amount equal to or greater than 1 weight percent based on the total weight of the B-side. Cell openers are used in an amount equal to or less than 4 weight percent based on the total weight of the B-side.

The B-side further comprises water b) viii) as a blowing agent, in an amount of from 1 to 4 weight percent based on the weight of the B-side.

Optionally, the B-side comprises a crosslinker, which preferably is used, in an amount of from 0.1 weight percent up to 3 weight percent based on the total weight of the B-side. The crosslinker contains at least three isocyanate-reactive groups per molecule and has an equivalent weight, per isocyanate-reactive group, of from 30 to about 125 and preferably from 30 to 75. Aminoalcohols such as monoethanolamine, diethanolamine and triethanolamine are preferred types, although compounds such as glycerine, trimethylolpropane and pentaerythritol also can be used.

The B-side optionally comprises a surfactant. If present, the surfactant is present in an amount equal to or greater than 0.1 weight percent, preferably equal to or greater than 0.2 weight percent, and more preferably equal to or greater than 0.5 weight percent based on the total weight of the B-side. If present, the surfactant is present in an amount equal to or less than 2 weight percent, preferably equal to or less than 1.5 weight percent, and more preferably equal to or less than 1 weight percent based on the total weight of the B-side.

The A-side and/or the B-side may have one or more additional types of other materials, as may be useful in the particular manufacturing process that is used or to impart desired characteristics to the resulting foam. These include, for example, catalysts, blowing agents, cell openers, surfactants, crosslinkers, chain extenders, fillers, colorants, fire retardants, pigments, antistatic agents, reinforcing fibers, antioxidants, preservatives, acid scavengers, and the like. The polyurethane foam formulation may contain one or more other catalysts. Of particular interest among these are tin carboxylates and tetravalent tin compounds. Examples of these include stannous octoate, dibutyl tin diacetate, dibutyl tin dilaurate, dibutyl tin dimercaptide, dialkyl tin dialkylmercapto acids, dibutyl tin oxide, dimethyl tin dimercaptide, dimethyl tin diisooctylmercaptoacetate, and the like.

These catalysts are typically used in small amounts. For example, the total amount of catalyst used may be 0.0015 to 5 weight %, preferably from 0.01 to 1 weight % based on the total weight of the B-side. Organometallic catalysts are typically used in amounts towards the low end of these ranges.

To manufacture the polyurethane foam of the present invention, a reactive formulation is prepared, said reactive formulation comprising: an A-side consisting essentially of a) i) a polymeric MDI blend; and optionally one or more additive selected from a plasticizer, a surfactant, a catalyst, a cell opener, a crosslinker, a chain extender, a flame retardant, a filler, a colorant, a pigment, an antistatic agent, reinforcing fibers, an antioxidant, a preservative, and/or an acid scavenger. The B-side, comprises a polyol blend comprising optionally b) i) a polyether polyol having a functionality equal to 2, b) ii) a polyether polyol having a functionality equal to 3, optionally b)iii) a polyether polyol having a functionality greater than 3, b) iv) a copolymer polyol, b) v) a blowing catalyst, b) vi) a gelling catalyst, b) vii) a cell opener, b) viii) water, and optionally one or more additional component selected from a crosslinker, a chain extender, a flame retardant, a filler, a colorant, a pigment, an antistatic agent, reinforcing fibers, an antioxidant, a preservative, and/or an acid scavenger. Preferably, the A-side and B-side are mixed together at 40.6 °C (105°F) or lower, preferably ambient temperature (21.1 °C to 40.6 °C (70°F to 105°F)) at the desired ratio, forming the reactive formulation which, when mixed, allows for the foaming reaction to occur. The A-side:B-side ratio is 1:1 to 5:1, more preferably 2:1 by volume. The polyol premix (B-side) and the organic polyisocyanate component (A-side) are mixed together by any known urethane foaming equipment. The resulting reactive formulation is subjected to conditions sufficient to cure the reactive formulation to form a polyurethane foam.

The method polyurethane foams produced according to the present invention may be used in any suitable application, such as those known in the art, including applications involving, for example, automotive applications requiring good flow and stability such as instrument panels.

### EXAMPLES

Comparative Examples A and Examples 1 to 5 comprise a formulated polyol blend reacted with a polymeric MDI. The polyol blend and polymeric MDI are mixed in a polyurethane dispense machine. This dispense machine is a standard machine that is available in the market for example from equipment Suppliers like Graco and Cannon.

The dispense machine is capable of mixing the system at the given ratio. The ratio is controlled by the pump/motor size. This dispense temperature of the material is in the range of 21.1 °C to 40.6 °C (70 to 105°F) and preferred at 29.4 °C (85°F) for both sides. The dispense pressure at 29.4 °C (85°F) material temperature; the pressure is in the range of 13.8 MPa (2,000 psi). Material dispense flow rate is in the range of 250 g/s at the mix-head.

High pressure foaming is used to produce physical property test samples and to measure foam flow. Cup foams are used to determine reactivity kinetics, stability, cell structure quality, and to characterize molded foam processing dynamics. Foam flow characterization is done using a 1.2 x 1.2 meter mold with adjustable depth capability. It is positioned in a hydraulic press and the mix head from the high pressure metering unit is located in the center of the top platen. Two opposing corners are blocked forming an 46 cm (18 inch) wide and 1.7 m (5.5 foot) long diagonal channel from one corner to another. Foam performance is characterized at a thickness of 8 mm. The minimum fill weight, surface quality, and cell structure are assessed.

The isocyanate:polyol mixing ratio by volume for Comparative Example A and Examples 1 to 5 and are listed in Table 1.

For Comparative Example A and Examples 1 to 5 formulated A-side (comprising isocyanate and other additives) and B-side (polyol blend comprising polyols and other additives) is made from the following components. Amounts are given as parts by weight based on the total weight of the A-side or B-side, respectively. In Table 1:
"SPECFLEX^{™} NC 630" is a polyoxyethylene capped polyoxypropylene polyol initiated with a blend of glycerol and sucrose, having nominal functionality of around 4.2, an equivalent weight of 1,810, a polyoxyethylene capped percentage around 15.5 %, a final primary OH percentage of around 79 %, a hydroxyl number of between 29.0 and 33.0, and is available from The Dow Chemical Company.

"VORANOL^{™} 220-110N" is a polyoxypropylene polyol initiated with propylene glycol, having nominal functionality of 2, an equivalent weight of 510, and is available from The Dow Chemical Company.

"VORANOL CP 6001" is a polyoxyethylene capped polyoxypropylene polyol initiated with glycerol, having nominal functionality of 3, an equivalent weight of 2,040, a polyoxyethylene percentage around 15 %, and is available from The Dow Chemical Company.

"VORANOL 230-660" is a polyoxypropylene polyol initiated with glycerol, having nominal functionality of 3, an equivalent weight of 85, a hydroxyl number of 675, and is available from The Dow Chemical Company.

"VORANOL 4053" is a polyoxyethylene capped polyoxypropylene polyol initiated with a blend of glycerol and sucrose, having nominal functionality of around 6.9, an equivalent weight of 1,795, a polyoxyethylene capped percentage around 75, and is available from The Dow Chemical Company.

"SPECFLEX 3943A" is a grafted polyether polyol containing copolymerized styrene and acrylonitrile, filtered to 100 µm (microns), having an equivalent weight of 1,030 in a polyoxyethylene/polyoxypropylene capped polyoxypropylene polyol initiated with glycerol, having nominal functionality of 3, a polyoxyethylene percentage around 13 %, an OH number of 29 to 33 mg KOH/g, and is available from The Dow Chemical Company.

"85% DEOA" is 85% pure diethanolamine 85% available from Aldrich.

"100% DEOA" is pure diethanolamine available from Aldrich.

"TEOA" is triethanolamine available from Aldrich.

"POLYCAT 15" is a catalyst that promotes surface cure N, N, N', N", N"-pentamethyldipropylenetriamine available from Air Products.

"JEFFCAT ZF 10" is a conventional blowing catalyst 2-[[2-[2-(dimethylamino)ethoxy]ethyl]methylamino]-ethanol available from Huntsman Chemical Company.

"DIEXTER^{™} G 156T-63" is a hydroxyl-terminated saturated polyester having an OH number of 63 to 65 and is available from COIM.

"REPITIAN^{™} 99375" is a black paste additive and is available from D. B. Becker Company.

"SPECFLEX NE 520" is a polymeric MDI that contains MDI having a functionality of 2.3, an isocyanate equivalent weight of 131, a viscosity of 40-50 mPas (40-50 cps) at 25 °C, an NCO content by weight of 32 %, and is available from The Dow Chemical Company.

Foam flow, stability, and cell structure are subjectively rated from 1 to 6 with 1 being worst and 6 being best. The foam stability and foam cell structure are determined from cup foams, visually examined, and subjectively rated. Foam stability, foam flow, and foam cell structure ratings are summarized in Table 1.

**TABLE 1**

| | Example | 1 | 2 | 3 | 4 | 5 | |
|---|---|---|---|---|---|---|---|
| Comparative Example | | | | | | | A |

| COMPOSITION, parts | | | | | | | |
|---|---|---|---|---|---|---|---|
| B-side | | | | | | | |
| | VORANOL CP 6001 | 57 | 57 | 60.15 | 76.5 | 37.5 | 53.85 |
| | VORANOL 220-110N | | 5 | | 6.7 | 3.3 | 10 |
| | SPECFLEX NC 630 | 21.5 | 21.2 | 23.05 | | 42.4 | 19.35 |
| | VORNAL 230-660 | 5 | | | | | |
| | SPECFLEX 3943A | 5 | 5 | 5 | 5 | 5 | 5 |
| | 100% DEOA | 0.3 | | | | | |
| | 85% DEOA | | 0.3 | 0.3 | 0.3 | 0.3 | 0.3 |
| | TEOA | 0.7 | 0.7 | 0.7 | 0.7 | 0.7 | 0.7 |
| | POLYCAT 15 | 0.9 | 0.9 | 0.9 | 0.9 | 0.9 | 0.9 |
| | JEFFCAT ZF-10 | 0.3 | 0.4 | 0.4 | 0.4 | 0.4 | 0.4 |
| | VORANOL 4053 | 2 | 2 | 2 | 2 | 2 | 2 |
| | DIEXTER G 156T-63 | 4 | 4 | 4 | 4 | 4 | 4 |
| | REPITIAN 99375 | 0.3 | 0.3 | 0.3 | 0.3 | 0.3 | 0.3 |
| | Water | 3 | 3.2 | 3.2 | 3.2 | 3.2 | 3.2 |
| | Total | 100 | 100 | 100 | 100 | 100 | 100 |

| A-side | | | | | | | |
|---|---|---|---|---|---|---|---|
| | SPECFLEX NE 520 | 100 | 100 | 100 | 100 | 100 | 100 |
| | Isocyanate Index | 105 | 105 | 105 | 105 | 105 | 105 |
| B-side:A-side ratio | | 1.54 | 1.63 | 1.66 | 1.62 | 1.64 | 1.6 |

| FOAM CHARACTERISTICS | | | | | | | |
|---|---|---|---|---|---|---|---|
| | Part weight, g | 43.1 | 45.8 | 44.4 | 45.5 | 45 | 44.7 |
| | Flow distance, mm | 467 | 514 | 510 | 521 | 513 | 518 |
| | Flow distance:weight ratio | 10.8 | 11.2 | 11.5 | 11.4 | 11.4 | 11.6 |
| | Flow rating | 1 | 2 | 5 | 4 | 3 | 6 |
| | Stability rating | 5 | 6 | 3 | 5 | 2 | 1 |
| | Cell structure rating | 4 | 6 | 2 | 3 | 5 | 1 |
| | Stability + Cell structure | 9 | 12 | 5 | 8 | 7 | 2 |
| | Flow + Cell Structure + Stability | 10 | 14 | 10 | 12 | 10 | 8 |

## Claims

1. A polyurethane foam comprising the reaction product of:
a) an A-side consisting essentially of
i) a polymeric MDI blend,
b) a B-side comprising:
i) 0 to less than 10 wt % of a polyether polyol having a functionality equal to 2,
ii) 35 to 80 wt % of a polyether polyol having a functionality equal to 3,
iii) 0 to 45 wt % of a polyether polyol having a functionality greater than 3,
iv) 5 to 15 wt % of a copolymer polyol,
v) 0.1 to 0.4 wt % of a blowing catalyst,
vi) 0.5 to 1 wt % of a gelling catalyst,
vii) 1 to 4 wt % of a cell opener,
and
viii) 1 to 4 wt % of water,
wherein the B-side weight percents are based on the total weight of the B-side.

2. A process to form a polyurethane foam, comprising the reaction product of:
a) an A-side consisting essentially of
i) a polymeric MDI blend,
b) a B-side comprising:
i) 0 to less than 10 wt % of a polyether polyol having a functionality equal to 2,
ii) 35 to 80 wt % of a polyether polyol having a functionality equal to 3,
iii) 0 to 45 wt % of a polyether polyol having a functionality greater than 3,
iv) 5 to 15 wt % of a copolymer polyol,
v) 0.1 to 0.4 wt % of a blowing catalyst,
vi) 0.5 to 1 wt % of a gelling catalyst,
vii) 1 to 4 wt % of a cell opener,
and
viii) 1 to 4 wt % of water,
wherein the B-side weight percents are based on the total weight of the B-side,
said process comprising the steps of:
A) forming a reactive blend by mixing said A-side and said B-side at or below 40.6 °C (105°F) and in a ratio, (A-side):(B-side), of 1:1 to 5:1 by volume; and
B) subjecting the resulting reactive blend to conditions sufficient to cure the reactive blend to form a polyurethane foam.

## Patentansprüche

1. Polyurethanschaum, umfassend das Reaktionsprodukt von:
a) einer A-Seite, die im Wesentlichen besteht aus
i) einer polymeren MDI-Mischung,
b) einer B-Seite, umfassend:
i) zu 0 bis weniger als 10 Gew.-% ein Polyetherpolyol mit einer Funktionalität gleich 2,
ii) zu 35 bis 80 Gew.-% ein Polyetherpolyol mit einer Funktionalität gleich 3,
iii) zu 0 bis 45 Gew.-% ein Polyetherpolyol mit einer Funktionalität von mehr als 3,
iv) zu 5 bis 15 Gew.-% ein Copolymerpolyol,
v) zu 0,1 bis 0,4 Gew.-% einen Treibkatalysator;
vi) zu 0,5 bis 1 Gew.-% einen Gelierkatalysator,
vii) zu 1 bis 4 Gew.-% einen Zellöffner,
und
viii) zu 1 bis 4 Gew.-% Wasser,
wobei die B-Seiten-Gewichtsprozente auf dem Gesamtgewicht der B-Seite basieren.

2. Verfahren zum Bilden eines Polyurethanschaums, umfassend das Reaktionsprodukt von:
a) einer A-Seite, die im Wesentlichen besteht aus
i) einer polymeren MDI-Mischung,
b) einer B-Seite, umfassend:
i) zu 0 bis weniger als 10 Gew.-% ein Polyetherpolyol mit einer Funktionalität gleich 2,
ii) zu 35 bis 80 Gew.-% ein Polyetherpolyol mit einer Funktionalität gleich 3,
iii) zu 0 bis 45 Gew.-% ein Polyetherpolyol mit einer Funktionalität von mehr als 3,
iv) zu 5 bis 15 Gew.-% ein Copolymerpolyol,
v) zu 0,1 bis 0,4 Gew.-% einen Treibkatalysator;
vi) zu 0,5 bis 1 Gew.-% einen Gelierkatalysator,
vii) zu 1 bis 4 Gew.-% einen Zellöffner,
und
viii) zu 1 bis 4 Gew.-% Wasser,
wobei die B-Seiten-Gewichtsprozente auf dem Gesamtgewicht der B-Seite basieren,
das Verfahren umfassend die Schritte:
A) Bilden einer reaktiven Mischung durch Mischen der A-Seite und der B-Seite bei oder unter 40,6 °C (105 °F) und in einem Verhältnis (A-Seite):(B-Seite), von 1:1 bis 5:1 nach Volumen;
und
B) Aussetzen der resultierenden reaktiven Mischung gegenüber Bedingungen, die ausreichen, um die reaktive Mischung zu härten, um einen Polyurethanschaum zu bilden.

## Revendications

1. Mousse de polyuréthane comprenant le produit de réaction de :
a) un côté A consistant essentiellement en
i) un mélange MDI polymère,
b) un côté B comprenant :
i) 0 à moins de 10 % en poids d'un polyol de polyéther ayant une fonctionnalité égale à 2,
ii) 35 à 80 % en poids d'un polyol de polyéther ayant une fonctionnalité égale à 3,
iii) 0 à 45 % en poids d'un polyol de polyéther ayant une fonctionnalité supérieure à 3,
iv) 5 à 15 % en poids d'un polyol de copolymère,
v) 0,1 à 0,4 % en poids d'un catalyseur d'expansion,
vi) 0, 5 à 1 % en poids d'un catalyseur de gélification,
vii) 1 à 4 % en poids d'un agent d'ouverture de cellule,
et
viii) 1 à 4 % en poids d'eau,
dans laquelle les pourcentages en poids côté B sont basés sur le poids total du côté B.

2. Procédé permettant de former une mousse de polyuréthane, comprenant le produit de réaction de :
a) un côté A consistant essentiellement en
i) un mélange MDI polymère,
b) un côté B comprenant :
i) 0 à moins de 10 % en poids d'un polyol de polyéther ayant une fonctionnalité égale à 2,
ii) 35 à 80 % en poids d'un polyol de polyéther ayant une fonctionnalité égale à 3,
iii) 0
à 45 % en poids d'un polyol de polyéther ayant une fonctionnalité supérieure à
3,
iv) 5 à 15 % en poids d'un polyol de copolymère,
v) 0,1 à 0,4 % en poids d'un catalyseur d'expansion,
vi) 0, 5 à 1 % en poids d'un catalyseur de gélification,
vii) 1 à 4 % en poids d'un agent d'ouverture de cellule,
et
viii) 1 à 4 % en poids d'eau,
dans lequel les pourcentages en poids côté B sont basés sur le poids total du côté B,
ledit procédé comprenant les étapes consistant à :
A) former un mélange réactif en mélangeant ledit côté A et ledit côté B à ou en dessous de 40,6 °C (105 °F) et dans un rapport, (côté A):(côté B), de 1:1 à 5:1 en volume ;
et
B) soumettre le mélange réactif résultant à des conditions suffisantes pour durcir le mélange réactif afin de former une mousse de polyuréthane.
